# EUROPEAN PATENT APPLICATION

(11) **EP 4 814 057 A1**
(43) Date of publication of application: **30.09.2026**
(21) Application number: 25880934.2
(22) Date of filing: 20.10.2025
(51) Int. Cl.: C08L 69/00, C08L 71/02, C08K 5/12

(54) **POLYCARBONATE COMPOSITION AND MOLDED ARTICLE FORMED THEREFROM**

(30) Priority: 23.12.2024 KR 20240194607; 17.10.2025 KR 20250150832
(71) Applicant: LG Chem, Ltd., Seoul 07336 (KR)
(72) Inventor: YANG, Young In, Daejeon 34122 (KR); KIM, Taehee, Daejeon 34122 (KR); BAHN, Hyong Min, Daejeon 34122 (KR); JEONG, Jaeeon, Daejeon 34122 (KR)
(74) Representative: Goddar, Heinz J.
(86) International application number: PCT/KR2025/016562
(87) International publication number: WO 2026/141893

(57) **Abstract**

The present disclosure relates to a polycarbonate composition and a molded article formed herefrom. The polycarbonate composition possesses excellent resistance to ionizing radiation, resulting in a low degree of discoloration caused by ionizing radiation and maintaining excellent transparency, making it suitable for providing various medical products that require sterilization treatment.

## Description

### [TECHNICAL FIELD]

### Cross-reference to Related Application(s)

This application claims the benefit of Korean Patent Application No. 10-2024-0194607 filed on December 23, 2024 and Korean Patent Application No. 10-2025-0150832 filed on October 17, 2025 with the Korean Intellectual Property Office, the disclosures of which are herein incorporated by reference in their entirety.

The present disclosure relates to a polycarbonate composition and a molded article formed therefrom.

### [BACKGROUND OF ART]

Polycarbonate is regarded as a suitable material for providing medical products due to its excellent transparency, heat resistance, and mechanical properties, as well as the advantage that it can be easily manufactured into the desired shape through extrusion or injection molding.

These medical products are sterilized by irradiating them with ionizing radiation to remove or destroy bacteria that cause fatal infections, and are then shipped to consumers in a packaged state to maintain their sterility.

However, when articles formed from polycarbonate are irradiated with ionizing radiation, yellowing (discoloration) occurs, and this becomes more severe as the dose of ionizing radiation increases. Therefore, methods of prescribing dark-colored pigments or dyes are being attempted to conceal the yellowing (discoloration) of polycarbonate.

However, when prescribing dark-colored pigments or dyes, the transmittance in the visible light region of articles formed from polycarbonate is reduced, which causes a problem in that it is not suitable for providing medical products such as hemodialyzers that require confirmation of the inside of the product.

### [DETAILED DESCRIPTION OF THE INVENTION]

### [Technical Problem]

In the present disclosure, there is provided a polycarbonate composition.

There is also provided a molded article formed from the polycarbonate composition.

### [Technical Solution]

In this specification, when a certain part is said to "comprise or include" a certain component, unless there is a specifically contrary statement, this does not exclude other components, but rather means that other components may be further included.

Unless otherwise specifically limited in this specification, the measurement temperature of all physical properties and the execution temperature of the manufacturing method may be room temperature. Room temperature refers to a temperature that is not specifically heated or cooled and may be about 5°C to 40°C, about 10°C to 35°C, or about 15°C to 30°C.

Hereinafter, the polycarbonate composition and the molded article formed therefrom according to specific embodiments of the present disclosure will be described.

According to an embodiment of the present disclosure, there is provided a polycarbonate composition including a polycarbonate, a polyalkylene glycol, and an ultraviolet absorber, and satisfying the following Equation 1 and Equation 2. $YI 2 < YI 1$ $T 2 > T 1$ in Equation 1 and Equation 2,
YI1 is a yellow index measured according to ASTM D1925 for a first sterilized specimen,
T1 is the transmittance measured according to ASTM D1003 and ASTM E1164 for the first sterilized specimen,
YI2 is a yellow index measured according to ASTM D1925 for a second sterilized specimen,
T2 is the transmittance measured according to ASTM D1003 and ASTM E1164 for the second sterilized specimen,
the first sterilized specimen is a specimen having a thickness of 3.2 mm and manufactured from a first polycarbonate composition comprising a polycarbonate and a polyalkylene glycol, irradiated with gamma rays at a dose of 50 kGy, and stored for 15 days under exposure to light and oxygen,
the second sterilized specimen is a specimen having a thickness of 3.2 mm and manufactured from a polycarbonate composition, which is prepared by adding an ultraviolet absorber to the first polycarbonate composition, irradiated with gamma rays at a dose of 50 kGy, and stored for 15 days under exposure to light and oxygen.

When articles formed from polycarbonate compositions are irradiated with ionizing radiation, yellowing (discoloration) occurs, and although the original color gradually returns over time, it does not completely revert to the original color and residual coloration remains. To conceal the yellowing (discoloration) of the polycarbonate, dark pigments or dyes have been prescribed. However, such pigments or dyes reduce transmittance in the visible light region, causing a problem in that they are not suitable for providing transparent medical products, such as hemodialyzers, where it is necessary to observe the interior of the product.

The present inventors have researched to improve the ionizing radiation resistance of polycarbonate, experimentally confirmed that among various ultraviolet absorbers that can be added to improve the weatherability of polycarbonate, a specific ultraviolet absorber not only improves the ionizing radiation resistance of polycarbonate but can also enhance transmittance in the visible light region after exposure to ionizing radiation, and thus completed the present invention. By using the specific ultraviolet absorber, it is possible to maintain or improve the inherent optical properties of polycarbonate at an excellent level even after exposure to ionizing radiation, thereby providing a polycarbonate composition suitable for medical products that require sterilization by ionizing radiation exposure.

The ultraviolet absorber (the specific ultraviolet absorber) may be a compound of the following Chemical Formula 1. 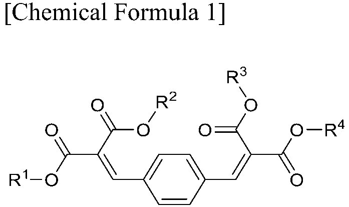 in Chemical Formula 1,
R¹ to R⁴ are each independently a C1 to C10 alkyl group.

The compound of Chemical Formula 1, unlike other ultraviolet absorbers that have been added to conventional polycarbonate compositions, exhibits a white color and therefore does not affect the yellow index (YI) of the polycarbonate composition. Furthermore, it minimizes yellowing (discoloration) caused by ionizing radiation exposure, thereby enabling the inherent optical properties of polycarbonates to be maintained at an excellent level even after exposure to ionizing radiation.

In addition, as additives such as ultraviolet absorbers are added to transparent polycarbonate, the original optical properties of the polycarbonate, specifically, the transmittance or brightness (L*) in the visible light range, tend to decrease. However, the compound of Chemical Formula 1 has the effect of improving the transmittance in the visible light range while minimizing yellowing caused by irradiating the polycarbonate composition with ionizing radiation, as can be confirmed in Experimental Examples described below.

In Chemical Formula 1, the C1 to C10 alkyl group may be a straight-chain, branched-chain, or cyclic alkyl group. As a non-limiting example, the C1 to C10 alkyl group may include a methyl group, an ethyl group, a propyl group (for example, an n-propyl group, an isopropyl group, etc.), a butyl group (for example, an n-butyl group, an isobutyl group, a tert-butyl group, a sec-butyl group, a cyclobutyl group, etc.), a pentyl group (for example, an n-pentyl group, an isopentyl group, a neopentyl group, a tert-pentyl group, a 1,1-dimethylpropyl group, a 1-ethylpropyl group, a 1-methylbutyl group, a cyclopentyl group, etc.), a hexyl group (for example, an n-hexyl group, a 1-methylpentyl group, a 2-methylpentyl group, a 4-methylpentyl group, a 3,3-dimethylbutyl group, a 1-ethylbutyl group, a 2-ethylbutyl group, a cyclopentylmethyl group, a cyclohexyl group, etc.), a heptyl group (for example, an n-heptyl group, a 1-methylhexyl group, a 4-methylhexyl group, a 5-methylhexyl group, a cyclohexylmethyl group, etc.), an octyl group (for example, an n-octyl group, a tert-octyl group, a 1-methylheptyl group, a 2-ethylhexyl group, a 2-propylpentyl group, etc.), a nonyl group (for example, an n-nonyl group, a 2,2-dimethylheptyl group, etc.), or a decyl group (for example, an n-decyl group, a 2-propylheptyl group, etc.).

In Chemical Formula 1, R¹ to R⁴ may each independently be, for example, a methyl group, an ethyl group, an n-propyl group, an isopropyl group, an n-butyl group, an isobutyl group, a tert-butyl group, a sec-butyl group, or a cyclobutyl group. Specifically, R¹ to R⁴ may each independently be, for example, a methyl group, an ethyl group, an n-propyl group, or an isopropyl group. More specifically, R¹ to R⁴ may each independently be, for example, a methyl group or an ethyl group.

The polycarbonate composition according to the embodiment can exhibit the aforementioned effects by including the compound of Chemical Formula 1 in an appropriate amount. For example, the compound of Chemical Formula 1 may be included in an amount of 0.001 to 0.500% by weight, 0.005 to 0.450% by weight, 0.010 to 0.400% by weight, 0.030 to 0.390% by weight, 0.040 to 0.380% by weight, or 0.045 to 0.370% by weight based on the solid content of the polycarbonate composition.

Most ultraviolet absorbers known in the art do not have an effect of improving resistance to ionizing radiation or increasing transmittance in the visible light region, and rather tend to deteriorate optical properties as can be confirmed in Experimental Examples described below. Therefore, in order to provide a polycarbonate composition that retains excellent optical properties even after exposure to ionizing radiation, the compound of Chemical Formula 1 alone may be used as the ultraviolet absorber. Specifically, the ultraviolet absorber may be one or a combination of two or more compounds represented by Chemical Formula 1, and may not include ultraviolet absorbers that do not belong to Chemical Formula 1.

As the polycarbonate composition according to the embodiment includes the ultraviolet absorber, the polycarbonate composition can provide a sterilized product exhibiting a lower yellow index and higher transmittance compared to before the addition of the ultraviolet absorber.

Specifically, YI1 in Equation 1 and T1 in Equation 2 refer to the yellow index and transmittance, respectively, of a first sterilized specimen manufactured from a polycarbonate composition before addition of an ultraviolet absorber, while YI2 in Equation 1 and T2 in Equation 2 refer to the yellow index and transmittance, respectively, of a second sterilized specimen manufactured from a polycarbonate composition after addition of an ultraviolet absorber. The polycarbonate composition according to the embodiment may exhibit the characteristic that YI2 is lower than YI1 and T2 is higher than T1, by including a specific ultraviolet absorber. T1, T2, YI1, and YI2 are values that vary according to the specific components and contents included in polycarbonate compositions and can be measured according to the methods described in Experimental Examples below.

The polycarbonate composition according to the embodiment includes a polyalkylene glycol. The polyalkylene glycol may include a polyalkylene glycol, an ether of polyalkylene glycol, and/or an ester of polyalkylene glycol.

The polyalkylene glycols may be, for example, one or two or more kinds selected from the group consisting of polyethylene glycol, polyethylene glycol methyl ether, polyethylene glycol dimethyl ether, polyethylene glycol dodecyl ether, polyethylene glycol benzyl ether, polyethylene glycol dibenzyl ether, polyethylene glycol-4-nonylphenyl ether, polypropylene glycol, polypropylene glycol methyl ether, polypropylene glycol dimethyl ether, polypropylene glycol dodecyl ether, polypropylene glycol benzyl ether, polypropylene glycol dibenzyl ether, polypropylene glycol-4-nonylphenyl ether, polytetramethylene glycol, polyethylene glycol diacetic acid ester, polyethylene glycol acetic propionic acid ester, polyethylene glycol dibutyric acid ester, polyethylene glycol distearic acid ester, polyethylene glycol dibenzoic acid ester, polyethylene glycol di-2,6-dimethylbenzoic acid ester, polyethylene glycol di-p-tert-butylbenzoic acid ester, polyethylene glycol dicaprylic acid ester, polypropylene glycol diacetic acid ester, polypropylene glycol acetic propionic acid ester, polypropylene glycol dibutyric acid ester, polypropylene glycol distearic acid ester, polypropylene glycol dibenzoic acid ester, polypropylene glycol di-2,6-dimethylbenzoic acid ester, polypropylene glycol di-p-tert-butylbenzoic acid ester, and polypropylene glycol dicaprylic acid ester.

For example, the polyalkylene glycol may be one or more selected from the group consisting of polyethylene glycol, polyethylene glycol methyl ether, polyethylene glycol dimethyl ether, polypropylene glycol, polypropylene glycol methyl ether, polypropylene glycol dimethyl ether, and polytetramethylene glycol.

The polyalkylene glycol may have a number average molecular weight (Mn) measured by GPC (gel permeation chromatography) of 1,000 to 5,000 g/mol or 1,500 to 3,000 g/mol, but is not limited thereto.

The polycarbonate composition according to the embodiment includes the polyalkylene glycol in an appropriate amount so as not to adversely affect the mechanical properties such as the impact strength of the polycarbonate composition, and can maintain excellent physical properties even after irradiation with ionizing radiation. For example, the polyalkylene glycol may be included in an amount of 0.001 to 5% by weight, 0.01 to 4% by weight, 0.1 to 3% by weight, 0.2 to 2% by weight, 0.3 to 1.5% by weight, 0.4 to 1.2% by weight, 0.5 to 1.1% by weight, or 0.6 to 1% by weight based on the solid content of the polycarbonate composition.

Meanwhile, the polycarbonate may include a repeating unit represented by the following Chemical Formula 2: 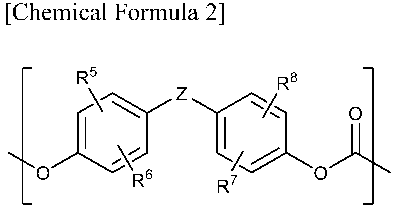 in Chemical Formula 2,
R⁵ to R⁸ are each independently hydrogen, a C1 to C10 alkyl group, a C1 to C10 alkoxy group, or halogen, and
Z is a C1 to C10 alkylene group which is unsubstituted or substituted with phenyl, a C3 to C15 cycloalkylene group which is unsubstituted or substituted with a C1 to C10 alkyl group, O, S, SO, SO₂, or CO.

For example, in Chemical Formula 2, R⁵ to R⁸ may each independently be hydrogen, a methyl group, a methoxy group, Cl, or Br.

For example, in Chemical Formula 2, Z may be a linear or branched C1 to C10 alkylene group which is unsubstituted or substituted with phenyl. Specifically, Z may be a methylene group, an ethane-1,1-diyl group, a propane-2,2-diyl group, a butane-2,2-diyl group, a 1-phenylethane-l,1-diyl group, or a diphenylmethylene group. In addition, Z may be a cyclohexane-1,1-diyl group, O, S, SO, SO2, or CO.

The repeating unit represented by Chemical Formula 2 may be formed by reacting an aromatic diol compound and a carbonate precursor.

For example, the aromatic diol compound may be at least one selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)-propane, 2,2-bis(4-hydroxy-3,5-dimethylphenyl)propane, 1,1-bis(4-hydroxyphenyl)-1-phenylethane, and bis(4-hydroxyphenyl)diphenylmethane. In addition, the carbonate precursor may be at least one selected from the group consisting of dimethyl carbonate, diethyl carbonate, dibutyl carbonate, dicyclohexyl carbonate, diphenyl carbonate, ditolyl carbonate, bis(chlorophenyl) carbonate, di-m-cresyl carbonate, dinaphthyl carbonate, bis(diphenyl) carbonate, phosgene, triphosgene, diphosgene, bromophosgene and bishaloformate.

The aromatic diol compound and the carbonate precursor may be polymerized by, for example, an interfacial polymerization method to provide a polycarbonate. The interfacial polymerization means that an organic solvent containing a carbonate precursor and an aqueous solution containing an aromatic diol compound are mixed together, and then polymerization occurs at the interface thereof.

In this case, the polymerization reaction is possible at normal pressure and low temperature, and it is easy to control the molecular weight. The interfacial polymerization may be performed in the presence of an acid binder and an organic solvent. In addition, the interfacial polymerization may include, for example, pre-polymerization followed by adding a coupling agent and then performing the polymerization again. In this case, a polycarbonate with a high molecular weight may be obtained.

The polymerization is preferably performed at a temperature of 0°C to 40°C for 10 minutes to 5 hours. In addition, it is preferable to maintain the pH of 9 or more or 11 or more during the reaction.

The solvent that can be used in the polymerization is not particularly limited as long as it is a solvent used in the polymerization of polycarbonate. For example, halogenated hydrocarbon such as methylene chloride or chlorobenzene may be used.

In addition, the polymerization is preferably performed in the presence of an acid binder, and the acid binder may be alkali metal hydroxides such as sodium hydroxide or potassium hydroxide, or amine compounds such as pyridine.

In addition, it is preferable to perform the polymerization in the presence of a molecular weight modifier in order to control the molecular weight of the polycarbonate during the polymerization. As the molecular weight modifier, an alkylphenol having 1 to 20 carbon atoms may be used, and specific examples thereof may be p-tert-butylphenol, p-cumyl phenol, decyl phenol, dodecyl phenol, tetradecyl phenol, hexadecyl phenol, octadecyl phenol, eicosyl phenol, docosyl phenol, triacontyl phenol or the like. Preferably, the molecular weight modifier may be added before the initiation of polymerization, during the initiation of polymerization, or after the initiation of polymerization.

The polycarbonate may have a melt flow rate (MFR) according to ASTM D1238 of 5 to 50 g/10min. When a polycarbonate having a melt flow rate in the above range is applied to a product with the above-described other components, excellent physical properties can be achieved, and the polycarbonate composition of the embodiment can exhibit excellent processability.

The melt flow rate may be measured under a load of 1.2 kg at 300°C according to ASTM D1238.

When the melt flow rate is less than 5 g/min, processability may decrease, resulting in a problem of productivity degradation, and when the melt flow rate is greater than 50 g/min, resin flow may be exceeded under the processing conditions, causing surface defects on the molded article. In addition, the melt flow rate may preferably be 5 to 40 g/10min, 7 to 35 g/10min, 10 to 30 g/10min, or 12 to 25 g/10min, and the polycarbonate composition with the above melt flow rate can exhibit more excellent processability and mechanical properties.

In addition, the polycarbonate may have a weight average molecular weight of 10,000 g/mol to 60,000 g/mol, 15,000 g/mol to 40,000 g/mol, or 19,000 g/mol to 30,000 g/mol. For example, the weight average molecular weight of the polycarbonate may be measured by a method of ASTM D5296 using polystyrene as a standard material. As the polycarbonate satisfies the weight average molecular weight range, the polycarbonate composition of the embodiment and a molded article including the polycarbonate composition can exhibit excellent mechanical properties and optical properties.

The polycarbonate described above is a main component of the polycarbonate composition of the embodiment, and may be included in an amount of 80 to 99.999% by weight, 90 to 99.999% by weight, 95 to 99.999% by weight, 97 to 99.999% by weight or 98 to 99.999% by weight based on the solid content of the polycarbonate composition. Thereby, the polycarbonate composition of the embodiment can exhibit heat resistance, impact resistance, mechanical strength, and/or transparency inherent in polycarbonate.

The polycarbonate composition according to the embodiment may further include various additives known in the art. As a non-limiting example, the polycarbonate composition may further include an antioxidant, a thermal stabilizer, a light stabilizer, a plasticizer, an antistatic agent, a nucleating agent, a flame retardant, a lubricant, an impact modifier, a fluorescence brightener, a pigment, or a dye.

The polycarbonate composition of the embodiment may further include a thermal stabilizer. Specifically, the polycarbonate composition of the embodiment may include a phosphorus based thermal stabilizer as the thermal stabilizer.

The phosphorus based thermal stabilizer may be one or two or more kinds selected from the group consisting of trimethyl phosphate, triethyl phosphate, tris(2,4-di-tert-butylphenyl) phosphate, trimethyl phosphite, triethyl phosphite, tripropyl phosphite, tributyl phosphite, tridecyl phosphite, triphenyl phosphite, diphenyldecyl phosphite, phenyldidecyl phosphite, diphenyldodecyl phosphite, diphenylisooctyl phosphite, diphenylisodecyl phosphite, tris(2,4-di-tert-butylphenyl) phosphite, tris(nonylphenyl) phosphite, and distearyl pentaerythritol diphosphite.

The polycarbonate composition of the embodiment can provide thermal stability without adversely affecting the inherent properties of the polycarbonate composition, particularly its optical properties, by including the phosphorus based thermal stabilizer in a suitable amount. For example, the phosphorus based thermal stabilizer may be included in an amount of 0.001 to 0.500% by weight, 0.005 to 0.300% by weight, 0.010 to 0.100% by weight, 0.020 to 0.080% by weight, 0.030 to 0.070% by weight, or 0.040 to 0.060% by weight, based on the solid content of the polycarbonate composition.

Conventional polycarbonate compositions have included sulfur containing thermal stabilizers as thermal stabilizers. However, as a result of experiments by the inventors, it was confirmed that sulfur containing thermal stabilizers adversely affect the optical properties of polycarbonate compositions and, in particular, tend to cause more yellowing when exposed to ionizing radiation. Accordingly, the polycarbonate composition of the embodiment may not include sulfur containing thermal stabilizers. Specifically, the sulfur containing thermal stabilizers may include, for example, methyl benzenesulfonate, ethyl benzenesulfonate, butyl benzenesulfonate, octyl benzenesulfonate, phenyl benzenesulfonate, methyl p-toluenesulfonate, ethyl p-toluenesulfonate, butyl p-toluenesulfonate, octyl p-toluenesulfonate, phenyl p-toluenesulfonate, methyl dodecylsulfonate, ethyl hexadecylsulfonate, propyl nonylsulfonate, butyl decylsulfonate, distearyl disulfide, dilauryl thiodipropionate, pentaerythritol tetrakis(3-laurylthiopropionate), or bis(phenylsulfonyl)methane.

Ionizing radiation for sterilizing medical products may include, for example, gamma rays, X-rays, electron rays, or beta rays. In general, when medical products formed from polycarbonates are exposed to ionizing radiation, yellowing (discoloration) occurs, and the yellowing (discoloration) becomes more severe as the dose of ionizing radiation increases.

After exposure to ionizing radiation, polycarbonate gradually returns to its original color over time. However, it does not completely recover its original color and retains some residual coloration. At this time, when polycarbonate sterilized by ionizing radiation is placed in an opened state (exposed to light and oxygen), it tends to return to its original color more rapidly compared to when it is placed in a sealed state (blocked from light and oxygen). However, since medical products that require sterilization are typically delivered to the customer in a packaged state after sterilization, they are mostly stored in a sealed state (blocked from light and oxygen) after sterilization. Therefore, polycarbonate compositions applied to medical products need to possess superior resistance to ionizing radiation.

The polycarbonate composition of the embodiment possesses excellent ionizing radiation resistance and can exhibit a low yellow index even after exposure to ionizing radiation.

For example, when the polycarbonate composition of the embodiment is prepared into a specimen with a thickness of 3.2 mm, irradiated with a gamma ray at a dose of 50 kGy, and stored for 15 days in a sealed state (blocked from light and oxygen), the yellow index measured according to ASTM D1925 may be 16.5 or less, 16 or less, 15.9 or less, 15.8 or less, 15.7 or less, 15.6 or less, 15.5 or less, 15.4 or less, or 15.3 or less. The lower limit of the yellow index measured after irradiation with gamma rays at a dose of 50 kGy and storage for 15 days in a sealed state is not particularly limited, and may be 0 or more, 3 or more, 5 or more, or 7 or more.

When the polycarbonate composition of the embodiment is prepared into a specimen with a thickness of 3.2 mm, irradiated with a gamma ray at a dose of 50 kGy, and stored for 15 days in a sealed state (blocked from light and oxygen), the difference △YI in yellow index before and after irradiation with ionizing radiation may be 17 or less, 16 or less, 15.5 or less, 15.4 or less, 15.3 or less, 15.2 or less, 15.1 or less, 15.0 or less, 14.9 or less, 14.8 or less, 14.7 or less, 14.6 or less, 14.5 or less, 14.4 or less, 14.3 or less, or 14.2 or less. The lower limit of the difference △YI in yellow index before and after irradiation with ionizing radiation is not particularly limited, and may be 0 or more.

If the polycarbonate composition of the embodiment is prepared into a specimen with a thickness of 3.2 mm, irradiated with a gamma ray at a dose of 50 kGy, and stored for 15 days in an opened state (exposed to light and oxygen), the yellow index measured according to ASTM D1925 (corresponding to the value of YI2 in Equation 1) may be 9 or less, 8 or less, 7.9 or less, 7.8 or less, 7.7 or less, 7.6 or less, 7.5 or less, 7.4 or less, 7.3 or less, 7.2 or less, 7.1 or less, 7.0 or less, 6.9 or less, 6.8 or less, 6.7 or less, or 6.6 or less. The lower limit of the yellow index measured after irradiation with a gamma ray at a dose of 50 kGy and storage for 15 days in an opened state (exposed to light and oxygen) is not particularly limited, and may be 0 or more, 1 or more, 2 or more, or 3 or more.

In addition, if the polycarbonate composition of the embodiment is prepared into a specimen with a thickness of 3.2 mm, irradiated with a gamma ray at a dose of 50 kGy, and stored for 15 days in an opened state (exposed to light and oxygen), the difference △YI in yellow index before and after irradiation with ionizing radiation may be 8 or less, 7.5 or less, 7 or less, 6.5 or less, 6.4 or less, 6.3 or less, 6.2 or less, 6.1 or less, 6.0 or less, 5.9 or less, or 5.8 or less. The lower limit of the difference △YI in yellow index before and after irradiation with ionizing radiation is not particularly limited, and may be 0 or more.

The polycarbonate composition of the embodiment possesses excellent ionizing radiation resistance and can exhibit superior optical properties even after exposure to ionizing radiation.

Specifically, the polycarbonate composition of the embodiment possesses excellent ionizing radiation resistance and can exhibit high transmittance even after exposure to ionizing radiation.

For example, when the polycarbonate composition of the embodiment is prepared into a specimen with a thickness of 3.2 mm, irradiated with a gamma ray at a dose of 50 kGy, and stored for 15 days in a sealed state (blocked from light and oxygen), the transmittance measured according to ASTM D1003 and ASTM E1164 may be 80% or more, 81% or more, 82% or more, 83% or more, 84% or more, 85% or more, 86% or more, 87% or more, 87.1% or more, 87.2% or more, 87.3% or more, 87.4% or more, 87.5% or more, 87.6% or more, or 87.7% or more.

If the polycarbonate composition of the embodiment is prepared into a specimen with a thickness of 3.2 mm, irradiated with gamma ray at a dose of 50 kGy, and stored for 15 days in an opened state (exposed to light and oxygen), the transmittance measured according to ASTM D1003 and ASTM E1164 (corresponding to the value of T2 in Equation 2) may be 80% or more, 85% or more, 86% or more, 87% or more, 88% or more, 89% or more, 89.1% or more, 89.2% or more, 89.3% or more, 89.4% or more, 89.5% or more, 89.6% or more, 89.7% or more, or 89.8% or more.

The upper limit of the transmittance values is not particularly limited, and may be 100% or less, or 98% or less.

The polycarbonate composition of the embodiment possesses excellent resistance to ionizing radiation, and can maintain a high brightness (L*) value even after exposure to ionizing radiation.

For example, when the polycarbonate composition of the embodiment is prepared into a specimen with a thickness of 3.2 mm, irradiated with a gamma ray at a dose of 50 kGy, and stored for 15 days in a sealed state (blocked from light and oxygen), the L* value according to CIE LAB may be 89 or more, 90 or more, 91 or more, 92 or more, 93 or more, 94 or more, 94.1 or more, 94.2 or more, 94.3 or more, or 94.4 or more.

If the polycarbonate composition of the embodiment is prepared into a specimen with a thickness of 3.2 mm, irradiated with a gamma ray at a dose of 50 kGy, and stored for 15 days in an open state (exposed to light and oxygen), the L* value according to CIE LAB may be 90 or more, 91 or more, 92 or more, 93 or more, 94 or more, 95 or more, 95.1 or more, 95.2 or more, or 95.3 or more.

The upper limit of the L* values is not particularly limited and may be 100 or less, or 98 or less.

The polycarbonate composition of the embodiment has excellent ionizing radiation resistance and can exhibit outstanding mechanical properties even after exposure to ionizing radiation.

Specifically, the polycarbonate composition of the embodiment possesses excellent resistance to ionizing radiation and can exhibit high impact strength even after exposure to ionizing radiation.

For example, when the polycarbonate composition of the embodiment is prepared into a specimen with a thickness of 3.2 mm, irradiated with a gamma ray at a dose of 50 kGy, and stored for 15 days in a sealed state (blocked from light and oxygen), the impact strength measured according to ASTM D256 may be 700 J/m or more, 750 J/m or more, 800 J/m or more, 810 J/m or more, 820 J/m or more, or 830 J/m or more, and may be 900 J/m or less, 890 J/m or less, or 880 J/m or less.

The polycarbonate composition of the embodiment can exhibit the impact strength within the aforementioned range even when stored in an opened state (exposed to light and oxygen) after being irradiated with ionizing radiation.

The polycarbonate composition of the embodiment possesses excellent resistance to ionizing radiation and can exhibit high tensile strength even after exposure to ionizing radiation.

For example, when the polycarbonate composition of the embodiment is prepared into a specimen with a thickness of 3.2 mm, irradiated with a gamma ray at a dose of 50 kGy, and stored for 15 days in a sealed state (blocked from light and oxygen), the tensile strength measured according to ASTM D638 may be 60 MPa or more, 65 MPa or more, 66 MPa or more, 67 MPa or more, 68 MPa or more, 69 MPa or more, 70 MPa or more, 71 MPa or more, or 72 MPa or more, and may be 100 MPa or less or 90 MPa or less.

The polycarbonate composition of the embodiment can exhibit tensile strength within the aforementioned range even when stored in an opened state (exposed to light and oxygen) after being irradiated with ionizing radiation.

The polycarbonate composition of the embodiment has strong resistance not only to sterilization by ionizing radiation but also to other sterilization methods, such as sterilization using gases like ethylene oxide or heated steam, and thus can be used to provide products that require various sterilization processes.

Meanwhile, according to another embodiment of the present disclosure, there is provided a molded article formed from the polycarbonate composition.

The molded article is formed from the polycarbonate composition with excellent resistance to ionizing radiation, and can be used to provide medical products, for example, a hemodialyzer, a blood filter, an infusion filter, a blood filter cartridge, a surgical instrument for muscle anastomosis, a venous connector, an inhaler for anesthesia, an oxygen supplier, a syringe, a 3-way stopcock, or a component thereof.

Since the molded article is manufactured from the polycarbonate composition described above, it exhibits resistance to ionizing radiation and is able to maintain excellent physical properties even after exposure to ionizing radiation.

A method of providing a molded article from the polycarbonate composition is not particularly limited. As a non-limiting example, the molded article may be prepared by adding additives commonly used in the technical field to which the present disclosure pertains, if necessary, to the polycarbonate composition and mixing, extruding the mixture into pellets with an extruder, drying the pellets, and then injecting them with an injection molding machine to provide molded articles.

The mixing of the polycarbonate composition may be performed by a melt-kneading method, for example, by a method using a ribbon blender, Henschel mixer, Banbury mixer, drum tumbler, single-screw extruder, twin-screw extruder, co-kneader, multi-screw extruder, or the like. The temperature of the melt-kneading may be appropriately adjusted, if necessary.

Next, the melt-kneaded product or pellets may be used as a raw material, and subjected to an injection molding method, an injection compression molding method, an extrusion molding method, a vacuum molding method, a blow molding method, a press molding method, an air pressure molding method, a foaming method, a heat bending molding method, a compression molding method, a calendering molding method, or a rotational molding method.

In the case of using the injection molding method, the polycarbonate composition is placed under high temperature conditions of 200 to 400°C. Since the polycarbonate composition is excellent in heat resistance, it can be applied to the above-described melt-kneading process or injection process with little occurrence of polymer modification or yellowing.

The size, thickness, etc. of the molded article may be appropriately adjusted depending on the purpose of use, and the shape thereof may be flat or curved depending on the purpose of use.

As described above, the molded article according to another exemplary embodiment can be provided as various medical products that require sterilization treatment, maintaining excellent transparency and exhibiting a low degree of discoloration caused by ionizing radiation.

### [ADVANTAGEOUS EFFECTS]

The polycarbonate composition according to an embodiment of the present disclosure exhibits excellent resistance to ionizing radiation, resulting in minimal discoloration caused by ionizing radiation and maintaining superior transparency, making it suitable for providing various medical products that require sterilization treatment.

### [DETAILED DESCRIPTION OF THE EMBODIMENTS]

Hereinafter, the function and effect of the present invention will be described in more detail through specific examples. However, these examples are for illustrative purposes only, and the invention is not intended to be limited by these examples.

### Example 1: Preparation of polycarbonate composition

A polycarbonate composition was prepared by adding 0.8 wt% polypropylene glycol (PPG) and 0.05 wt% of a compound of the following chemical formula a, based on the solid content of the polycarbonate composition, to bisphenol A-type linear polycarbonate (PC; melt flow rate as measured according to ASTM D1238 (MFR; 300°C, 1.2 kg): 14 g/10 min). The polycarbonate composition included, as a phosphorus based thermal stabilizer, 0.05 wt% of tris(2,4-di-tert-butylphenyl)phosphate (Irgafos P-168) based on the solid content of the polycarbonate composition.

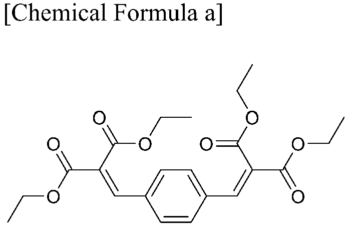

### Examples 2 to 5, Reference Example 1, and Comparative Examples 1 to 7: Preparation of polycarbonate composition

A polycarbonate composition was prepared in the same manner as in Example 1, except that the type and content of the additives included in the polycarbonate composition was adjusted as shown in Table 1 below.

**[Table 1]**

| | PC | Thermal stabilizer | | Polyalkylene glycol | Ultraviolet absorber | | |
|---|---|---|---|---|---|---|---|
| | | Phosphorus based thermal stabilizer | Sulfur containing thermal stabilizer | PPG | Chemical Formula a | Chemical Formula b | Chemical Formula c |
| Example 1 | 99.10 | 0.05 | | 0.8 | 0.05 | | |
| Example 2 | 99.05 | 0.05 | | 0.8 | 0.10 | | |
| Example 3 | 99.00 | 0.05 | | 0.8 | 0.15 | | |
| Example 4 | 98.90 | 0.05 | | 0.8 | 0.25 | | |
| Example 5 | 98.80 | 0.05 | | 0.8 | 0.35 | | |
| Reference Example 1 | 99.00 | 0.05 | 0.05 | 0.8 | 0.10 | | |
| Comparative Example 1 | 99.95 | 0.05 | | | | | |
| Comparative | 99.15 | 0.05 | | 0.8 | | | |
| Example 2 | | | | | | | |
| Comparative Example 3 | 99.12 | 0.05 | | 0.8 | | 0.03 | |
| Comparative Example 4 | 99.08 | 0.05 | | 0.8 | | 0.07 | |
| Comparative Example 5 | 99.00 | 0.05 | | 0.8 | | | 0.15 |
| Comparative Example 6 | 98.80 | 0.05 | | 0.8 | | | 0.35 |
| Comparative Example 7 | 98.85 | 0.05 | | 0.8 | 0.15 | | 0.15 |

| | | | | | | | |
|---|---|---|---|---|---|---|---|
| (Unit: wt%) Phosphorus based thermal stabilizer: tris(2,4-di-tert-butylphenyl)phosphate (Irgafos P-168) | | | | | | | |

Sulfur containing thermal stabilizer: dilauryl thiodipropionate (DLTDP)

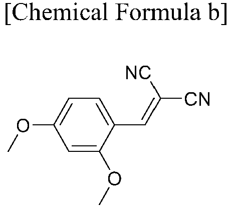

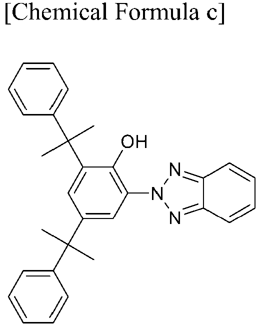

### Experimental Examples: Evaluation of physical properties of polycarbonate composition

Specimens were prepared from the polycarbonate compositions prepared in Examples and Comparative Examples by the method described below. Specifically, the polycarbonate composition was supplied to a twin-screw extruder (L/D=36, Φ=45, barrel temperature of 240°C) at a rate of 55 kg per hour to prepare pellets, and the pellets were injection-molded to prepare a specimen having width, length, and thickness of 50 mm, 30 mm, and 3 mm, respectively.

Six specimens were prepared for each polycarbonate composition prepared in Examples and Comparative examples, each specimen was placed in a zipper bag, then placed in a box, and all specimens were sterilized by irradiating them with gamma rays at a dose of 50 kGy. Although sterilization by ionizing radiation is generally performed at a dose of 25 kGy, in this experimental example, sterilization was carried out by irradiating with gamma rays at a dose of 50 kGy in order to evaluate resistance to ionizing radiation under severe conditions.

The three specimens of the six specimens irradiated with gamma rays at a dose of 50 kGy were opened, and stored for 15 days under exposure to light and oxygen, while the other three were sealed in zipper bags and stored inside a box for 15 days.

The specimens that became discolored immediately after sterilization exhibit a phenomenon of fading, gradually returning to their original color over time. However, they are unable to fully regain their original color and retain some residual coloration. In this case, if the sterilized specimens are stored in an open state, their exposure to light and oxygen causes them to return to their original color at a relatively faster rate. Conversely, when stored in a sealed state, the absence of light and oxygen causes the rate at which they return to their original color to be relatively slower.

The yellow index, transmittance, and L* value for three specimens were measured using the methods described below, and the average values were calculated and presented in Table 2 and Table 3.

### 1) Yellow Index (YI)

The yellow index was measured at room temperature (25°C) with UltraScan PRO (manufactured by HunterLab) according to ASTM D1925.

### 2) Transmittance

The transmittance was measured with UltraScan PRO (manufactured by HunterLab) according to ASTM D1003 and ASTM E1164. The transmittance was defined as the average value of the transmittance measured in the wavelength range of 380 nm to 780 nm, which corresponds to the visible light region.

### 3) L* value according to CIE LAB

The L* value according to CIE LAB was measured with the UltraScan PRO (manufactured by HunterLab) in accordance with ASTM E308.

### 4) Notched Izod Impact Strength

The impact strength was measured according to ASTM D256 for a specimen with a thickness of 3.2 mm.

### 5) Tensile strength

The tensile strength was measured at a test speed of 5 mm/min according to ASTM D638 for a specimen with a thickness of 3.2 mm.

**[Table 2]**

| | Stored for 15 days in an open state | | | | |
|---|---|---|---|---|---|
| | Yellow Index (YI) | | | Transmittance (%) | L* |
| | △YI | Initial YI | Final YI | | |
| Example 1 | 5.82 | 0.76 | 6.58 | 89.37 | 95.10 |
| Example 2 | 6.36 | 0.76 | 7.12 | 89.45 | 95.18 |
| Example 3 | 6.00 | 1.13 | 7.13 | 89.63 | 95.22 |
| Example 4 | 6.90 | 0.97 | 7.87 | 89.70 | 95.28 |
| Example 5 | 5.75 | 1.26 | 7.01 | 89.82 | 95.32 |
| Reference Example 1 | 6.01 | 1.47 | 7.48 | 87.70 | 94.40 |
| Comparative Example 1 | 8.87 | 0.92 | 9.79 | 88.48 | 94.73 |
| Comparative Example 2 | 8.08 | 1.39 | 9.47 | 88.75 | 94.85 |
| Comparative Example 3 | 6.48 | 6.80 | 13.28 | 89.08 | 94.99 |
| Comparative Example 4 | 7.63 | 9.80 | 17.43 | 88.58 | 94.77 |
| Comparative Example 5 | 9.34 | 1.37 | 10.71 | 88.91 | 94.91 |
| Comparative Example 6 | 14.77 | 1.62 | 16.39 | 87.71 | 94.40 |
| Comparative Example 7 | 10.40 | 2.41 | 12.81 | 88.19 | 94.61 |

**[Table 3]**

| | Stored for 15 days in a sealed state | | | | | | |
|---|---|---|---|---|---|---|---|
| | Impact Strength (J/m) | Tensile strength (MPa) | Yellow Index (YI) | | | Transmittance (%) | L* |
| | | | △YI | Initial YI | Final YI | | |
| Example 1 | 832 | 72 | 14.43 | 0.86 | 15.29 | 87.48 | 94.30 |
| Example 2 | 832 | 70 | 15.06 | 0.76 | 15.82 | 87.44 | 94.29 |
| Example 3 | 830 | 70 | 14.14 | 1.11 | 15.25 | 87.62 | 94.37 |
| Example 4 | 832 | 72 | 14.59 | 0.98 | 15.57 | 87.68 | 94.39 |
| Example 5 | 824 | 71 | 14.16 | 1.22 | 15.38 | 87.72 | 94.41 |
| Reference Example 1 | 812 | 70 | 14.71 | 1.50 | 16.21 | 85.56 | 93.48 |
| Comparative Example 1 | 848 | 69 | 21.27 | 0.94 | 22.21 | 85.33 | 93.38 |
| Comparative Example 2 | 828 | 70 | 15.49 | 1.40 | 16.89 | 87.06 | 94.12 |
| Comparative Example 3 | 848 | 71 | 13.22 | 6.83 | 20.05 | 87.34 | 94.24 |
| Comparative Example 4 | 864 | 70 | 13.82 | 9.78 | 23.60 | 86.99 | 94.10 |
| Comparative Example 5 | 840 | 71 | 17.84 | 1.38 | 19.22 | 86.56 | 93.91 |
| Comparative Example 6 | 848 | 70 | 22.96 | 1.62 | 24.58 | 85.59 | 93.49 |
| Comparative Example 7 | 837 | 72 | 17.03 | 2.42 | 19.45 | 86.61 | 93.93 |

In Table 2 and Table 3 above, the initial YI refers to the yellow index (YI) of the specimen before gamma ray irradiation, the final YI refers to the yellow index (YI) of the specimen after gamma ray irradiation and storage for 15 days, and △YI is the difference between the initial YI and the final YI.

Referring to Table 2 and Table 3 above, it was confirmed that when a specimen was stored in a sealed state (blocked from light and oxygen) after gamma ray irradiation, the optical properties of the specimen recovered more slowly than when it was stored in an opened state (exposed to light and oxygen), thereby exhibiting inferior optical properties.

Specifically, referring to Comparative Examples 1 and 2, it was confirmed that Comparative Example 2, in which a polyalkylene glycol was added to the composition of Comparative Example 1, exhibited improved optical properties compared to Comparative Example 1. Furthermore, in the case of Examples 1 to 5, which used the compound of Chemical Formula 1 as an ultraviolet absorber, the yellow index (YI) was lower, and both the transmittance and the L* value were higher than that of Comparative Example 2.

For reference, in Reference Example 1, it was shown that when the compound of Chemical Formula 1 and a sulfur containing thermal stabilizer are used together, the sulfur containing thermal stabilizer somewhat adversely affects the improvement effect by the compound of Chemical Formula 1.

In Comparative Examples 3 to 6, it is possible to confirm the physical properties after irradiation with ionizing radiation of polycarbonate compositions to which ultraviolet absorbers other than the compound of Chemical Formula 1 were added. When Comparative Examples 3 to 6 are compared with Comparative Example 2, it was confirmed that, in cases where ultraviolet absorbers other than the compound of Chemical Formula 1 were used, the degree of improvement in yellowing after ionizing radiation irradiation was negligible or not improved at all.

In addition, when the compound of Chemical Formula 1 was added, both the transmittance and the L* value were improved. However, when using ultraviolet absorbers other than the compound of Chemical Formula 1, the effect of improving transmittance and L* value could not be confirmed.

In Comparative Example 7, when a combination of the compound of Chemical Formula 1 and another ultraviolet absorber not belonging to Chemical Formula 1 is used as the ultraviolet absorber, the physical properties of the polycarbonate composition after irradiation with ionizing radiation can be confirmed. Comparing Comparative Example 7 with Comparative Example 2, even when using the compound of Chemical Formula 1, if another ultraviolet absorber other than the compound of Chemical Formula 1 is added, it was found that the yellowing phenomenon after irradiation with ionizing radiation is not improved at all, and both the transmittance and the L* value also decrease.

Accordingly, it could be confirmed that the polycarbonate composition according to an embodiment of the present disclosure is suitable for providing medical products such as hemodialyzers that are sterilized by ionizing radiation and are required to maintain excellent transparency even after irradiation with ionizing radiation.

## Claims

1. A polycarbonate composition comprising a polycarbonate, a polyalkylene glycol, and an ultraviolet absorber, and
wherein the polycarbonate composition satisfies the following Equation 1 and Equation 2: $YI 2 < YI 1$ $T 2 > T 1$
in Equation 1 and Equation 2,
YI1 is a yellow index measured according to ASTM D1925 for a first sterilized specimen,
T1 is the transmittance measured according to ASTM D1003 and ASTM E1164 for the first sterilized specimen,
YI2 is a yellow index measured according to ASTM D1925 for a second sterilized specimen,
T2 is the transmittance measured according to ASTM D1003 and ASTM E1164 for the second sterilized specimen,
the first sterilized specimen is a specimen having a thickness of 3.2 mm and manufactured from a first polycarbonate composition comprising a polycarbonate and a polyalkylene glycol, irradiated with gamma rays at a dose of 50 kGy, and stored for 15 days under exposure to light and oxygen,
the second sterilized specimen is a specimen having a thickness of 3.2 mm and manufactured from a polycarbonate composition, which is prepared by adding an ultraviolet absorber to the first polycarbonate composition, irradiated with gamma rays at a dose of 50 kGy, and stored for 15 days under exposure to light and oxygen.

2. The polycarbonate composition of claim 1, wherein the ultraviolet absorber is a compound of the following Chemical Formula 1: 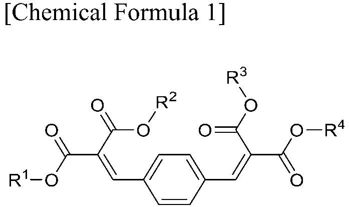 in Chemical Formula 1,
R¹ to R⁴ are each independently a C1 to C10 alkyl group.

3. The polycarbonate composition of claim 2, wherein the compound of Chemical Formula 1 is included in an amount of 0.001 to 0.500% by weight based on the solid content of the polycarbonate composition.

4. The polycarbonate composition of claim 1, wherein the polyalkylene glycol is one or more selected from the group consisting of polyethylene glycol, polyethylene glycol methyl ether, polyethylene glycol dimethyl ether, polypropylene glycol, polypropylene glycol methyl ether, polypropylene glycol dimethyl ether, and polytetramethylene glycol.

5. The polycarbonate composition of claim 1, wherein the polyalkylene glycol is included in an amount of 0.001 to 5% by weight based on the solid content of the polycarbonate composition.

6. The polycarbonate composition of claim 1, wherein the polycarbonate comprises a repeating unit represented by the following Chemical Formula 2: 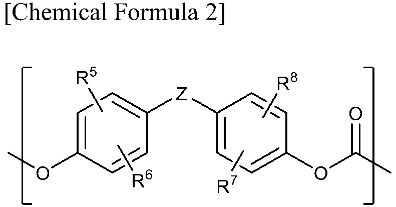 in Chemical Formula 2,
R⁵ to R⁸ are each independently hydrogen, a C1 to C10 alkyl group, a C1 to C10 alkoxy group, or halogen, and
Z is a C1 to C10 alkylene group which is unsubstituted or substituted with phenyl, a C3 to C15 cycloalkylene group which is unsubstituted or substituted with a C1 to C10 alkyl group, O, S, SO, SO₂, or CO.

7. The polycarbonate composition of claim 1, further comprising a phosphorus based thermal stabilizer.

8. The polycarbonate composition of claim 1, wherein the polycarbonate composition does not comprise a sulfur containing thermal stabilizer.

9. The polycarbonate composition of claim 1, wherein the yellow index measured according to ASTM D1925 for a specimen manufactured from the polycarbonate composition with a thickness of 3.2 mm, irradiated with gamma rays at a dose of 50 kGy, and stored for 15 days under exposure to light and oxygen, is 9 or less.

10. The polycarbonate composition of claim 1, wherein when the polycarbonate composition is prepared into a specimen with a thickness of 3.2 mm, irradiated with a gamma ray at a dose of 50 kGy, and stored for 15 days under exposure to light and oxygen, the difference △YI in yellow index before and after irradiation with ionizing radiation is 8 or less.

11. The polycarbonate composition of claim 1, wherein the transmittance measured according to ASTM D1003 and ASTM E1164 for a specimen manufactured from the polycarbonate composition with a thickness of 3.2 mm, irradiated with gamma rays at a dose of 50 kGy, and stored for 15 days under exposure to light and oxygen, is 80% or more.

12. The polycarbonate composition of claim 1, wherein the L* value according to CIE LAB for a specimen manufactured from the polycarbonate composition with a thickness of 3.2 mm, irradiated with gamma rays at a dose of 50 kGy, and stored for 15 days under exposure to light and oxygen, is 90 or more.

13. The polycarbonate composition of claim 1, wherein the impact strength measured according to ASTM D256 for a specimen manufactured from the polycarbonate composition with a thickness of 3.2 mm, irradiated with gamma rays at a dose of 50 kGy, and stored for 15 days under conditions blocking light and oxygen, is 700 J/m or more and 900 J/m or less.

14. The polycarbonate composition of claim 1, wherein the tensile strength measured according to ASTM D638 for a specimen manufactured from the polycarbonate composition with a thickness of 3.2 mm, irradiated with gamma rays at a dose of 50 kGy, and stored for 15 days under conditions blocking light and oxygen, is 60 MPa or more and 100 MPa or less.

15. A molded article formed from the polycarbonate composition of claim 1.

16. The molded article of claim 15, wherein the molded article is a hemodialyzer, a blood filter, an infusion filter, a blood filter cartridge, a surgical instrument for muscle anastomosis, a venous connector, an inhaler for anesthesia, an oxygen supplier, a syringe, a 3-way stopcock, or a component thereof.
